# EUROPÄISCHE PATENTANMELDUNG

(11) **EP 4 306 369 A1**
(43) Veröffentlichungstag der Anmeldung: **17.01.2024**
(21) Anmeldenummer: 23185402.7
(22) Anmeldetag: 13.07.2023
(51) Int. Cl.: B60R 22/18, B60N 2/68

(54) **FREIZEITFAHRZEUG UND GURTBOCKANORDNUNG**

(30) Priorität: 13.07.2022 DE 102022117463
(71) Anmelder: Hymer GmbH & Co. KG, 88339 Bad Waldsee (DE)
(72) Erfinder: Fiedler, Andreas, 89231 Neu-Ulm (DE); Hörmann, Hannes, 88339 Bad Waldsee (DE)
(74) Vertreter: Waller, Stefan

(57) **Zusammenfassung**

Eine Gurtbockanordnung (1) für ein Freizeitfahrzeug (2), insbesondere ein Wohnmobil, umfasst einen Gurtbock (3) und ein Rückhaltesystem (4), das zumindest einen Gurt (5) umfasst. Ferner ist eine Gurtführung (6) vorgesehen, die den Gurt (5) führt. Die Gurtführung (6) ist zumindest im Wesentlichen in den Gurtbock (3) integriert. Ferner wird ein Freizeitfahrzeug (2) mit zumindest einer solchen Gurtbockanordnung (1) angegeben.

## Beschreibung

Die Erfindung betrifft ein Freizeitfahrzeug, insbesondere ein Wohnmobil, mit einer Gurtbockanordnung, die einen Gurtbock und ein Rückhaltessystem umfasst, sowie eine solche Gurtbockanordnung.

Aus der DE 20 2020 106 815 U1 ist eine Gurtbockanordnung für ein Straßenfahrzeug, insbesondere ein Wohnmobil, bekannt. Die bekannte Gurtbockanordnung weist einen Gurtbock und ein Rückhaltesystem auf, welches ein Gurtsystem und einen am Gurtbock angeordneten Haltebeschlag einer Sitzsicherung für einen Kindersitz umfasst. Hierbei sind am Gurtbock mehrere einzelne Haltebeschläge getrennt voneinander und eigenständig nebeneinander angeordnet und befestigt.

Aufgabe der Erfindung ist es, eine Gurtbockanordnung für ein Straßenfahrzeug, insbesondere ein Wohnmobil, und ein Freizeitfahrzeug, insbesondere ein Wohnmobil, mit zumindest einer Gurtbockanordnung anzugeben, die eine verbesserte Ausgestaltung und Funktionsweise ermöglichen.

Die Aufgabe wird durch eine Gurtbockanodnung mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch eine Gurtbockanordnung für ein Freizeitfahrzeug, insbesondere ein Wohnmobil, mit einem Gurtbock und einem Rückhaltesystem, das zumindest einen Gurt umfasst, gelöst, wobei eine Gurtführung vorgesehen ist, die den Gurt führt, und wobei die Gurtführung zumindest im Wesentlichen in den Gurtbock integriert ist.

Ferner wird die Aufgabe durch ein Freizeitfahrzeug, insbesondere ein Wohnmobil, mit zumindest einer solchen Gurtbockanordnung gelöst.

In vorteilhafter Weise ist die Gurtführung zumindest teilweise durch einen in dem Gurtbock ausgestalteten Gurtkanal gebildet. Hierdurch ist eine zuverlässige Führung des Gurtes ermöglicht. Ferner kann ein Einklemmen des Gurtes in vorteilhafter Weise verhindert werden. Beispielsweise kann bei einer herkömmlichen Ausgestaltung mit einem freien Gurtverlauf im Bereich eines Gestells der Gurt eingeklemmt werden, was die Bedienbarkeit oder das Aufrollen des Gurtes beeinträchtigt. Im Unterschied dazu kann mit der vorgeschlagenen Ausgestaltung eine Bedienbarkeit und/oder ein Aufrollen des Gurtes verbessert beziehungsweise gewährleistet werden.

Vorteilhaft ist es auch, dass ein mit dem Gurtbock verbundener Retraktor vorgesehen ist. Hierdurch ist auch eine vorteilhafte Integration des Retraktors in den Gurtbock möglich.

Vorteilhaft ist es ferner, dass der Retraktor so angeordnet ist, dass im montierten Zustand der Gurt von dem Retraktor schräg oder vertikal durch die Gurtführung nach oben zu einer Führungsöffnung verläuft. Hierdurch wird eine vorteilhafte Gurtführung ermöglicht. Hierbei kann eine Austrittsstelle des Gurtes so positioniert werden, dass sich eine ergonomische Anlage des Gurtes an einer Person, insbesondere an einer Schulter der Person, ergibt. Ferner kann in vorteilhafter Weise eine Reibungskraft bei einer Belastung des Gurtes ermöglicht werden.

Vorteilhaft ist es, dass eine mit dem Gurtbock verbundene Abdeckkappe für die Gurtführung vorgesehen ist und dass die Abdeckkappe eine Führungsöffnung aufweist, durch die sich der Gurt erstreckt. Durch die Abdeckkappe kann die Führung des Gurtes an der Austrittsstelle optimiert werden. Ferner kann durch die Abdeckkappe das Design günstig beeinflusst werden.

Vorteilhaft ist es, dass die Gurtführung so ausgestaltet ist, dass bei einer Belastung des Gurtes bei einem Crash oder einem Crashtest eine flächige Lastenleitung in den Gurtbock erfolgt. Somit kann eine flächige anstelle einer punktuellen Lasteinleitung in das Gurtgestell ermöglicht werden. Dies ist insbesondere durch den Gurtkanal realisierbar.

Vorteilhaft ist es auch, dass die Gurtführung innerhalb einer Außenkontur des Gurtbocks angeordnet ist. Dadurch wird ein Kontakt mit umgebenden Elementen vermieden. Außerdem kann der Gurt dadurch optimal verstaut werden. Außerdem werden ein unerwünschter Kontakt und somit eine mögliche Beeinflussung der Funktionsweise des Rückhaltesystems hierdurch von vornherein verhindert.

In vorteilhafter Weise ist die Gurtführung so ausgestaltet, dass nach einem Crash oder Crashtest eine Beweglichkeit des Gurtes in der Gurtführung gewährleistet ist. Dadurch kann beispielsweise selbst bei Kollision mit benachbarten Bauteilen der Gurtkanal bestehen bleiben, der die Beweglichkeit des Gurtes gewährleistet.

Vorteilhaft ist es, dass die Gurtführung den Gurt zumindest an seinen Seiten seitlich führt. Hierdurch ist ein zuverlässiges Anliegen des Gurtes in einer bezüglich der Sicherheit optimierten Weise möglich. Diese kann dann auch während der Fahrt gewährleistet werden, wenn der Gurt beispielsweise teilweise ab und wieder aufgerollt wird.

Somit kann eine Gurtbockanordnung in vorteilhafter Weise realisiert werden. Der Gurtbock kann hierbei mit einer integrierten Gurtumlenkung und Gurtführung realisiert werden. Hierbei besteht speziell eine Eignung für ein oder zwei Sitzplätze des Freizeitfahrzeugs. Somit eignet sich die Lösung insbesondere für einen Fahrersitz und/oder einen Beifahrersitz. Die Lösung eignet sich aber auch in besonderer Weise für eine hintere, insbesondere eine zweite oder dritte, Sitzreihe.

Besonders bevorzugt ist der Gurtbock aus einem vorzugsweise faserverstärkten Kunststoff gebildet. Im Unterschied zu einer Stahl-Schweißkonstruktion ergeben sich dadurch wesentliche Vorteile. Die Gurtumlenkung, die bei einer herkömmlichen Ausgestaltung als gebogenes Stahlteil mit Lasche zum Anschweißen ausgeführt sein kann, kann dann in verbesserter Weise realisiert werden. Insbesondere muss im Unterschied zu einer herkömmlichen Ausgestaltung, bei der die Verbindung mit dem Gestell der Schraubverbindungen ausgeführt ist, was zu punktuellen Krafteinleitungen führt, keine punktuelle Krafteinleitung mehr auftreten. Vielmehr kann eine flächige Krafteinleitung realisiert werden. Im Unterschied zu einer herkömmlichen Ausgestaltung, bei der ein Bügel für die Gurtumlenkung für den Gurtverlauf schwenkbar ausgeführt werden muss, kann eine deutlich verbesserte Führung erzielt werden. Ferner kann ein Einklemmschutz für den Gurt realisiert werden. Die Rückstellkraft des Retraktors wird bei der vorgeschlagenen Ausgestaltung so vorgegeben, dass ein Aufwickeln des Gurtes gewährleistet ist.

Durch die vorteilhafte Gurtführung können Kollisionen mit benachbarten Bauteilen, wie Polster, einer Rückwand hinter dem Gurtgestell und einer Kopfstützenverstellung, von vornherein verhindert werden. Dies kann insbesondere dadurch gewährleistet werden, dass der obere Gurtumlenkpunkt nicht über das Gurtgestell hinaussteht. Hierbei kann auch verhindert werden, dass es an dem oberen Gurtumlenkpunkt zu einer punktuellen Lasteinleitung in das Gurtgestell kommt.

Je nach Ausgestaltung der vorgeschlagenen Gurtbockanordnung können ein oder mehrere der folgenden Vorteile realisiert werden. Es kann ein definierter Gurtkanal realisiert werden, der den Gurtverlauf vorgibt und sicherstellt. Dadurch kann die Freigängigkeit des Gurtes gewährleistet werden. Speziell kann ein Einklemmen und/oder Scheuern des Gurtes verhindert werden. Hierbei bleibt selbst bei einer Kollision mit benachbarten Bauteilen ein Kanal bestehen, der die Beweglichkeit des Gurtes gewährleistet.

Die Gurtumlenkung kann direkt in den Gurtbock integriert werden und muss dann nicht als einzelnes beziehungsweise angeschraubtes Teil ausgeführt werden. Speziell kann eine flächige anstelle einer punktuellen Lasteinteilung in den Gurtbock (Gurtgestell) realisiert werden. Eine seitliche Führung für den Gurt kann entstehen. Die Führung und Gurtumlenkung kann so in den Gurtbock integriert werden, dass sie nicht über die Geometrie hinausragen. Dadurch ergeben sich auch Vorteile für das Design des Gurtbocks und/oder eines Rückenpolsters.

Der Gurt kann in Querrichtung zum Gurtbock, insbesondere zur Fahrtrichtung, in einem gegebenenfalls eingeschränkten Winkelbereich genutzt werden.

Weitere Vorteile und Einzelheiten der Erfindung werden anhand der in den schematischen Figuren dargestellten Ausführungsbeispiele näher erläutert. Hierbei zeigen:
- Fig. 1: eine Gurtbockanordnung für ein Freizeitfahrzeug in einer auszugsweisen, schematischen Darstellung entsprechend einem Ausführungsbeispiel der Erfindung;
- Fig. 2: ein Detail der in Fig. 1 dargestellten Gurtbockanordnung in einer auszugsweisen, schematischen Darstellung, wobei eine Abdeckkappe gezeigt ist;
- Fig. 3: einen auszugsweisen, schematischen Schnitt durch die in Fig. 2 dargestellte Gurtbockanordnung in einer räumlichen Darstellung aus der in Fig. 3 mit III bezeichneten Blickrichtung, wobei der Verlauf des Gurtes im Bereich eines Gurtkanals und der Abdeckkappe veranschaulicht ist; und
- Fig. 4: ein Freizeitfahrzeug mit einer Gurtbockanordnung entsprechend dem Ausführungsbeispiel in einer stark vereinfachten, auszugsweisen Darstellung.

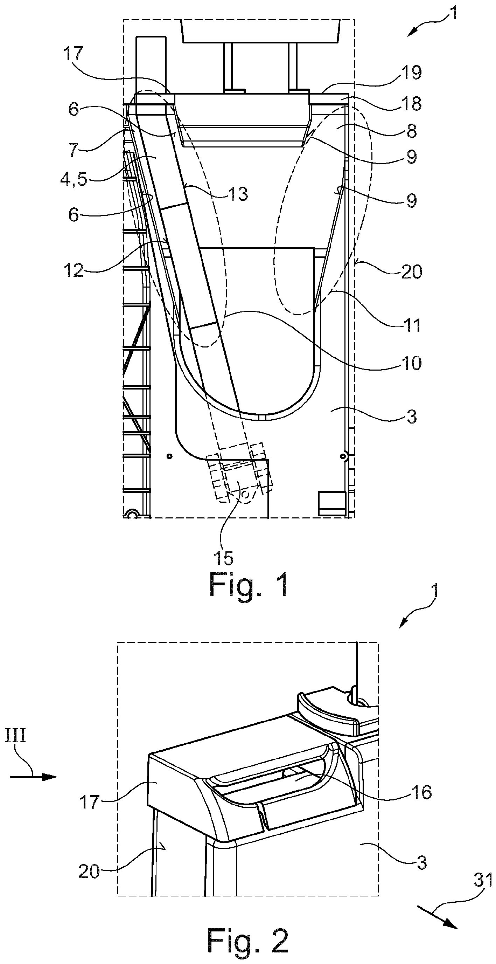

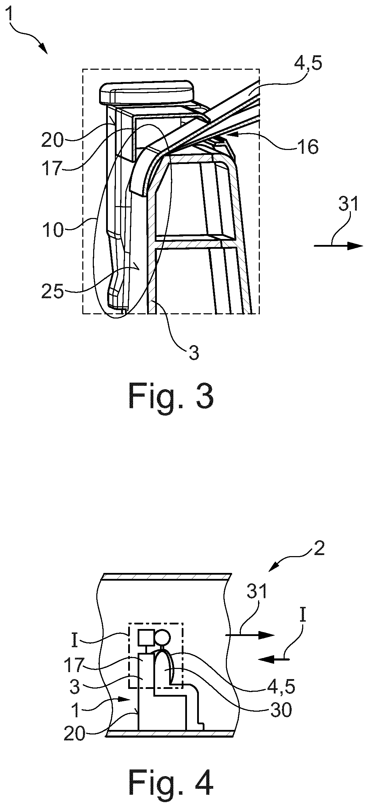

Fig. 1 bis 3 zeigen eine Gurtbockanordnung für ein Freizeitfahrzeug 2 (Fig. 4) entsprechend einem Ausführungsbeispiel der Erfindung. Hierbei zeigt Fig. 1 eine schematische, auszugsweise Darstellung der Gurtbockanordnung 1 aus der in Fig. 4 mit I bezeichneten Blickrichtung. Fig. 3 zeigt eine auszugsweise, schematische, räumliche Schnittdarstellung eines Details der Gurtbockanordnung 1 aus der in Fig. 2 mit III bezeichneten Blickrichtung.

Das Freizeitfahrzeug 2 ist vorzugsweise als Wohnmobil ausgebildet. Die Gurtbockanordnung 1 eignet sich besonders für ein als Wohnmobil ausgebildetes Freizeitfahrzeug 2.

Die Gurtbockanordnung 1 umfasst einen Gurtbock 3 und ein Rückhaltesystem 4. Das Rückhaltesystem 4 weist in diesem Ausführungsbeispiel einen Gurt 5 auf. Ferner ist eine Gurtführung 6 vorgesehen, die zum Führen des Gurtes 5 dient. Die Gurtführung 6 ist in den Gurtbock 3 integriert. Der Gurtbock 3 basiert hierbei auf zumindest einem Kunststoff, insbesondere einem faserverstärkten Kunststoff.

In dem Gurtbock 3 ist ein Gurtkanal 7 vorgesehen. Die Gurtführung 6 wird durch den Gurtkanal 7 gebildet.

In diesem Ausführungsbeispiel weist der Gurtbock 3 einen weiteren Gurtkanal 8 auf. Durch den weiteren Gurtkanal 8 ist eine weitere Gurtführung 9 realisiert. Die Gurtführung 7 verläuft in einem Bereich 10, während die weitere Gurtführung 9 in einem Bereich 11 verläuft. Hierbei ist eine symmetrische Ausgestaltung möglich.

In diesem Ausführungsbeispiel ist der Gurt 5 an seinen Seiten 12, 13 in der Gurtführung 6 geführt. Somit ist eine vorteilhafte seitliche Führung des Gurtes 5 realisiert.

Das Rückhaltesystem 4 weist einen Retraktor 15 auf, auf dem in einer Ausgangsstellung der Gurt 5 teilweise aufgerollt ist. Von dem Retraktor 15 kann der Gurt 5 abgerollt und wieder automatisch aufgerollt werden. Der Retraktor 15 ist mit dem Gurt 3 verbunden und vorzugsweise in dem Gurtbock 3 angeordnet. Von dem Retraktor 15 verläuft der Gurt 5 in diesem Ausführungsbeispiel durch die Gurtführung 6 schräg nach oben zu einer Führungsöffnung 16 der Abdeckkappe 17. Außerdem ist eine weitere Abdeckkappe 18 vorgesehen, die ebenfalls eine Führungsöffnung 19 aufweist. Die Gurtführung kann auch durch die weitere Gurtführung 9 realisiert sein, so dass der Gurt 5 dann von dem Retraktor 15 schräg nach oben zu einer Führungsöffnung 19 der weiteren Abdeckkappe 18 verläuft. Dadurch kann je nach Anwendungsfall ein geeigneter Gurtverlauf realisiert werden.

Die Gurtführung 6 ist innerhalb einer Außenkontur 20 des Gurtbocks 3 angeordnet. Insbesondere verläuft der Gurt 5 entlang einer Fläche 25 des Gurtbocks 3. Die Fläche 25 befindet sich hierbei innerhalb des Gurtkanals 7. Dadurch ist die Gurtführung 6 so ausgestaltet, dass bei einer Belastung des Gurts 5 bei einem Crash oder einem Crashtest eine flächige Lasteinleitung in den Gurtbock 3 erfolgt. Hierbei tritt zwischen dem Gurt 5 und der Fläche 25 des Gurtbocks 3 eine Reibungskraft auf. Somit kommt es zu einer vorteilhaften Rückhaltung eines Passagiers 30 (Fig. 4).

Fig. 4 zeigt das Freizeitfahrzeug 2 in einer stark vereinfachten, auszugsweisen Darstellung. Hierbei sitzt der Passagier 30 auf der Gurtbockanordnung 1. Der Passagier 30 kann hierbei in einer Fahrtrichtung 31 orientiert sein. Bei einem Frontalaufprall wird der Passagier 30 durch den Gurt 5 des Rückhaltesystems 4 zurückgehalten. Hierbei tritt eine Reibungskraft zwischen dem Gurt 5 und der Fläche 25 auf, die eine flächige Krafteinleitung in den Gurtbock 3 ermöglicht. Außerdem erfolgt eine vorteilhafte Umlenkung des Gurts 5 an der Abdeckkappe 17, wobei der Gurt 5 zuverlässig in der Führungsöffnung 16 geführt ist. Die Führungsöffnung 16 gewährleistet hierbei bereits vor dem Crash, dass der Gurt 5 in verbesserter Weise an dem Passagier 30 anliegt. Der Gurtkanal 7 verhindert zudem ein Verdrehen oder eine Kollision des Gurtes 5. Dadurch ist eine zuverlässige Wirkung des Rückhaltesystems 4 gewährleistet. Die Aufrollkraft des Retraktors 15 ist hierbei gegebenenfalls gegenüber einer herkömmlichen Ausgestaltung erhöht, um das Aufrollen des Gurtes 5 unter Berücksichtigung der Reibung des Gurtes 5 an der Fläche 25 zu gewährleisten.

Die Erfindung ist nicht auf die beschriebenen Ausführungsformen beschränkt.

## Patentansprüche

1. Gurtbockanordnung (1) für ein Freizeitfahrzeug (2), insbesondere ein Wohnmobil, mit einem Gurtbock (3) und einem Rückhaltesystem (4), das zumindest einen Gurt (5) umfasst,
**dadurch gekennzeichnet,**
**dass** eine Gurtführung (6) vorgesehen ist, die den Gurt (5) führt, und dass die Gurtführung (6) zumindest im Wesentlichen in den Gurtbock (3) integriert ist.

2. Gurtbockanordnung nach Anspruch 1,
**dadurch gekennzeichnet,**
**dass** die Gurtführung (6) zumindest teilweise durch einen in dem Gurtbock (3) ausgestalteten Gurtkanal (7) gebildet ist.

3. Gurtbockanordnung nach Anspruch 1 oder 2,
**dadurch gekennzeichnet,**
**dass** ein mit dem Gurtbock (3) verbundener Retraktor (15) vorgesehen ist.

4. Gurtbockanordnung nach Anspruch 3,
**dadurch gekennzeichnet,**
**dass** der Retraktor (15) so angeordnet ist, dass im montierten Zustand der Gurt (5) von dem Retraktor (15) schräg oder vertikal durch die Gurtführung (6) nach oben zu einer Führungsöffnung (16) verläuft.

5. Gurtbockanordnung nach einem der Ansprüche 1 bis 4,
**dadurch gekennzeichnet,**
**dass** eine mit dem Gurtbock (3) verbundene Abdeckkappe (17) für die Gurtführung (6) vorgesehen ist und dass die Abdeckkappe (17) eine Führungsöffnung (16) aufweist, durch die sich der Gurt (5) erstreckt.

6. Gurtbockanordnung nach einem der Ansprüche 1 bis 5,
**dadurch gekennzeichnet,**
**dass** die Gurtführung (6) so ausgestaltet ist, dass bei einer Belastung des Gurtes (5) bei einem Crash oder einem Crashtest eine flächige Lasteinleitung in den Gurtbock (3) erfolgt.

7. Gurtbockanordnung nach einem der Ansprüche 1 bis 6,
**dadurch gekennzeichnet,**
**dass** die Gurtführung (6) innerhalb einer Außenkontur (20) des Gurtbocks (3) angeordnet ist.

8. Gurtbockanordnung nach einem der Ansprüche 1 bis 7,
**dadurch gekennzeichnet,**
**dass** der Gurtbock (3) zumindest im Wesentlichen aus zumindest einem vorzugsweise faserverstärkten Kunststoff gebildet ist.

9. Gurtbockanordnung nach einem der Ansprüche 1 bis 8,
**dadurch gekennzeichnet,**
**dass** die Gurtführung (6) den Gurt (5) zumindest an seinen Seiten (12, 13) seitlich führt.

10. Freizeitfahrzeug (2), insbesondere Wohnmobil, mit zumindest einer Gurtbockanordnung (1) nach einem der Ansprüche 1 bis 9.
